# EUROPEAN PATENT APPLICATION

(11) **EP 4 827 187 A1**
(43) Date of publication of application: **21.10.2026**
(21) Application number: 24911186.5
(22) Date of filing: 25.12.2024
(51) Int. Cl.: H04W 52/14, H04W 52/04

(54) **SIGNAL TRANSMITTING METHOD AND APPARATUS**

(30) Priority: 28.12.2023 CN 202311855785
(71) Applicant: Huawei Technologies Co., Ltd., Shenzhen, Guangdong 518129 (CN)
(72) Inventor: XIE, Xinqian, Shenzhen, Guangdong 518129 (CN)
(74) Representative: Thun, Clemens
(86) International application number: PCT/CN2024/142164
(87) International publication number: WO 2025/140262

(57) **Abstract**

A signal sending method and apparatus are provided. The method includes: A terminal device determines first transmit power of a first signal in a first time unit on a first carrier, and determines second transmit power of a second signal in a second time unit on a second carrier; and when a sum of the first transmit power and the second transmit power is greater than a transmit power threshold, based on a signal type of the first signal and a signal type of the second signal, determines to send the first signal at third transmit power in the first time unit on the first carrier and send the second signal at the second transmit power in the second time unit on the second carrier; or send the first signal at the first transmit power in the first time unit on the first carrier and send the second signal at fourth transmit power in the second time unit on the second carrier. This helps effectively control transmit power of an uplink signal, thereby increasing a rate at which the terminal device sends the uplink signal.

## Description

This application claims priority to Chinese Patent Application No. 202311855785.6, filed with the China National Intellectual Property Administration on December 28, 2023, and entitled "SIGNAL SENDING METHOD AND APPARATUS", which is incorporated herein by reference in its entirety.

### TECHNICAL FIELD

This application relates to the communication field, and more specifically, to a signal sending method and apparatus.

### BACKGROUND

With continuous development of communication systems, a terminal device supports simultaneous access to two network devices. This access manner is referred to as dual connectivity (dual connectivity, DC). One network device is a primary network device, and the other network device is a secondary network device. One or more cells in which the primary network device provides a service for the terminal device are referred to as a master cell group (master cell group, MCG), and one or more cells in which the secondary network device provides a service for the terminal device are referred to as a secondary cell group (secondary cell group, SCG). To improve a rate at which the terminal device sends an uplink signal to the network device, the terminal device operating in a DC mode may send uplink signals to the network device on both carriers in the MCG and the SCG within a same time period. However, total power of the terminal device for sending uplink signals on all carriers should not exceed a preset threshold of transmit power of the terminal device. Therefore, if total power at which the terminal sends the uplink signal on the carriers in the MCG and the SCG exceeds maximum transmit power, the terminal device needs to actively reduce transmit power on one or more carriers.

Currently, some terminal devices may determine priorities of signals based on signal types of uplink communication signals sent on the carriers in the MCG and the SCG within a same time period, and reduce transmit power of a signal with a lower priority. If types of signals sent by the terminal device on two CGs are the same, transmit power of a signal on the SCG may be reduced based on a case in which a priority of a signal on the MCG is higher than a priority of the signal on the SCG.

However, in an uplink multi-carrier integrated sensing and communication scenario, a signal sending method of the terminal device cannot effectively control transmit power of an uplink signal.

### SUMMARY

This application provides a signal sending method and apparatus. In an uplink multi-carrier integrated sensing and communication scenario, a terminal device simultaneously sends any two different uplink signals among an uplink sensing signal, an uplink integrated sensing and communication signal, or an uplink communication signal on two different carriers, so that transmit power of the two uplink signals can be effectively controlled, thereby helping increase a rate at which the terminal device sends the uplink signal to a network device.

According to a first aspect, a signal sending method is provided, including: determining first transmit power of a first signal in a first time unit on a first carrier, and determining second transmit power of a second signal in a second time unit on a second carrier, where the first time unit and the second time unit overlap in time, and at least one of the first signal and the second signal is an uplink integrated sensing and communication signal or an uplink sensing signal; when a sum of the first transmit power and the second transmit power is greater than a transmit power threshold, based on a signal type of the first signal and a signal type of the second signal, determining third transmit power of the first signal in the first time unit, where the third transmit power is less than the first transmit power, or determining fourth transmit power of the second signal in the second time unit, where the fourth transmit power is less than the second transmit power; and sending the first signal at the third transmit power in the first time unit on the first carrier, and sending the second signal at the second transmit power in the second time unit on the second carrier; or sending the first signal at the first transmit power in the first time unit on the first carrier, and sending the second signal at the fourth transmit power in the second time unit on the second carrier.

In a possible implementation, the method may be performed by a terminal device, or may be performed by a chip in the terminal device.

It should be understood that the first time unit and the second time unit partially or completely overlap in time. This is not limited in embodiments of this application.

It should be understood that the network device may include a first network device and a second network device. The first network device may be a group of network devices, and may include one or more network devices. The second network device may be a group of network devices, and may include one or more network devices.

For example, the terminal device may send the first signal to the first network device in N first time units on the first carrier, and may send the second signal to the second network device in the second time unit on the second carrier.

In this embodiment of this application, based on priority information of signal types of the first signal and the second signal, the terminal device may reduce the first transmit power of the first signal to the third transmit power if a priority of the first signal is lower than a priority of the second signal, or the terminal device may reduce the second transmit power of the second signal to the fourth transmit power if a priority of the second signal is lower than a priority of the first signal.

For example, the first signal may include the uplink sensing signal, and the second signal may include an uplink communication signal. If a priority of the uplink sensing signal is higher than a priority of the uplink communication signal, the terminal device may send the uplink communication signal to the first network device at the fourth transmit power. Alternatively, if a priority of the uplink sensing signal is lower than a priority of the uplink communication signal, the terminal device may send the uplink sensing signal to the second network device at the third transmit power.

For example, the first signal may include the uplink integrated sensing and communication signal, and the second signal may include an uplink communication signal. If a priority of the uplink integrated sensing and communication signal is higher than a priority of the uplink communication signal, the terminal device may send the uplink communication signal to the first network device at the fourth transmit power. Alternatively, if a priority of the uplink integrated sensing and communication signal is lower than a priority of the uplink communication signal, the terminal device may send the uplink integrated sensing and communication signal to the second network device at the third transmit power.

For example, the first signal may include the uplink integrated sensing and communication signal, and the second signal may include the uplink sensing signal. If a priority of the uplink integrated sensing and communication signal is higher than a priority of the uplink sensing signal, the terminal device may send the uplink sensing signal to the first network device at the fourth transmit power. Alternatively, a priority of the uplink integrated sensing and communication signal may be lower than a priority of the uplink sensing signal. In this case, the terminal device may send the uplink integrated sensing and communication signal to the second network device at the third transmit power.

According to the signal sending method in this embodiment of this application, in an uplink multi-carrier integrated sensing and communication scenario, the terminal device may simultaneously send any two different uplink signals among the uplink sensing signal, the uplink integrated sensing and communication signal, or the uplink communication signal on two different carriers. When a sum of transmit power of the two uplink signals exceeds a transmit power threshold of the terminal device, the terminal device can reduce transmit power of an uplink signal with a lower priority based on priority information of the two uplink signals. This helps increase a rate at which the terminal device sends the uplink signal to the network device.

With reference to the first aspect, in some implementations of the first aspect, the first signal includes the uplink sensing signal, the second signal includes an uplink communication signal, a priority of the uplink sensing signal is higher than a priority of the uplink communication signal, the first signal is sent at the first transmit power, and the second signal is sent at the fourth transmit power.

It should be understood that the uplink sensing signal is a signal continuously sent in the N first time units. If transmit power of the signal is reduced in one of the time units, performance of the uplink sensing signal sent in the N first time units may not meet a requirement, resulting in a waste of the N first time units. Therefore, the priority of the uplink sensing signal is higher than the priority of the uplink communication signal.

With reference to the first aspect, in some implementations of the first aspect, the first signal includes the uplink sensing signal, the second signal includes one or more of the following: a sounding reference signal SRS, a physical uplink shared channel PUSCH carrying no acknowledgment ACK, a PUSCH carrying no negative acknowledgment NACK, or a PUSCH carrying no channel state information CSI, a priority of the first signal is higher than a priority of the second signal, the first signal is sent at the first transmit power, and the second signal is sent at the fourth transmit power.

With reference to the first aspect, in some implementations of the first aspect, the first signal includes the uplink sensing signal, the second signal includes one or more of the following: a physical random access channel PRACH, a physical uplink shared channel PUCCH carrying an ACK, a PUCCH carrying a NACK, a PUCCH carrying CSI, a PUCCH carrying a communication protocol SR, a PUSCH carrying an ACK, a PUSCH carrying a NACK, or a PUSCH carrying CSI, a priority of the first signal is lower than a priority of the second signal, the first signal is sent at the third transmit power, and the second signal is sent at the second transmit power.

With reference to the first aspect, in some implementations of the first aspect, the first signal includes the uplink integrated sensing and communication signal, the second signal includes the uplink communication signal, a priority of the uplink integrated sensing and communication signal is higher than a priority of the uplink communication signal, the first signal is sent at the first transmit power, and the second signal is sent at the fourth transmit power.

It should be understood that the uplink integrated sensing and communication signal may have two capabilities: communication and sensing capabilities. To better protect communication and sensing capabilities of a network, the priority of the uplink integrated sensing and communication signal is higher than the priority of the uplink communication signal.

With reference to the first aspect, in some implementations of the first aspect, the first signal includes the uplink integrated sensing and communication signal, the second signal includes the uplink communication signal, and a communication function of the uplink integrated sensing and communication signal is different from a communication function of the uplink communication signal. If a priority of the communication function of the uplink integrated sensing and communication signal is higher than a priority of the communication function of the uplink communication signal, a priority of the first signal is higher than a priority of the second signal, the first signal is sent at the first transmit power, and the second signal is sent at the fourth transmit power. Alternatively, if a priority of the communication function of the uplink integrated sensing and communication signal is lower than a priority of the communication function of the uplink communication signal, a priority of the first signal is lower than a priority of the second signal, the first signal is sent at the third transmit power, and the second signal is sent at the second transmit power.

For example, that the communication functions are the same may mean that the uplink integrated sensing and communication signal and the uplink communication signal are different. For example, if the uplink integrated sensing and communication signal is the PUCCH that carries the CSI, and the uplink communication signal is the PUSCH that carries the NACK, the priority of the uplink integrated sensing and communication signal is higher than that of the uplink communication signal.

For example, if the uplink integrated sensing and communication signal is the SRS, and the uplink communication signal is the PUCCH carrying the ACK, the priority of the uplink communication signal is higher than the priority of the uplink integrated sensing and communication signal.

With reference to the first aspect, in some implementations of the first aspect, the first signal includes the uplink integrated sensing and communication signal, the second signal includes the uplink sensing signal, a priority of the uplink integrated sensing and communication signal is higher than a priority of the uplink sensing signal, the first signal is sent at the first transmit power, and the second signal is sent at the fourth transmit power.

It should be understood that the uplink integrated sensing and communication signal may have two capabilities: communication and sensing capabilities. To better protect and maintain communication and sensing capabilities of a network, the priority of the uplink integrated sensing and communication signal is higher than the priority of the uplink sensing signal.

With reference to the first aspect, in some implementations of the first aspect, before determining the first transmit power of the first signal in the first time unit on the first carrier, the method further includes: determining to send the first signal to a network device in N first time units on the first carrier, where N is an integer greater than 1. When total power of the first signal in the N first time units is greater than a preset power threshold, a priority of the first signal is lower than a priority of the second signal, or when total power of the first signal in the N first time units is less than or equal to a preset power threshold, a priority of the first signal is higher than a priority of the second signal. The total power of the first signal in the N first time units is a sum of a sum of transmit power of M first time units that have been sent and a sum of transmit power of the first signal that is to be sent in N-M first time units, and M is an integer greater than 0.

For example, the uplink sensing signal or the uplink integrated sensing and communication signal needs to be continuously sent in the N first time units to better maintain a signal sensing capability. Therefore, a signal priority may be determined based on total power of the signal in the N first time units.

With reference to the first aspect, in some implementations of the first aspect, the first signal needs to be continuously sent in N1 first time units among the N first time units, and the preset power threshold satisfies the following formula: the preset power threshold is equal to a coefficient r multiplied by a product of N1 and the first transmit power. r is a real number greater than 0 and less than 1, and N1 is an integer greater than 1.

With reference to the first aspect, in some implementations of the first aspect, sending the first signal at the third transmit power in the first time unit on the first carrier, and sending the second signal at the second transmit power in the second time unit on the second carrier include: when a transmit power difference between the first transmit power and the third transmit power is less than or equal to a preset threshold, sending the first signal at the third transmit power in the first time unit on the first carrier, and sending the second signal at the second transmit power in the second time unit on the second carrier.

For example, the transmit power difference may be a difference in logarithmic values. For example, if the first transmit power is 2 decibels (decibels, dB), and the third transmit power is 17 dB, the transmit power difference is 3 dB. Alternatively, the transmit power difference may be a difference in linear values. For example, if the first transmit power is 0.05 W, and the third transmit power is 0.03 watt (watt, W), the transmit power difference is 0.02 W. Both values of the foregoing transmit power differences approach 0, and exceed the preset threshold of the transmit power difference.

According to a second aspect, a signal sending apparatus is provided, which is configured to perform the method according to any one of the possible implementations of the first aspect. Specifically, the apparatus includes units/modules configured to perform the method according to any one of the possible implementations of the first aspect.

According to a third aspect, this application provides another signal sending apparatus, including a processor. The processor is coupled to a memory, and may be configured to execute instructions in the memory, to implement the method according to any one of the possible implementations of the first aspect. Optionally, the signal sending apparatus further includes the memory. Optionally, the signal sending apparatus further includes a communication interface, and the processor is coupled to the communication interface.

In an implementation, the signal sending apparatus is a terminal device. When the signal sending apparatus is the terminal device, the communication interface may be a transceiver or an input/output interface.

In another implementation, the signal sending apparatus is a chip configured in the terminal device. When the signal sending apparatus is the chip configured in the terminal device, the communication interface may be the input/output interface.

According to a fourth aspect, a processor is provided, including an input circuit, an output circuit, and a processing circuit. The processing circuit is configured to: receive a signal through the input circuit, and transmit a signal through the output circuit, so that the processor performs the method according to any one of the possible implementations of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a fifth aspect, a processing apparatus is provided, including a processor and a memory. The processor is configured to: read instructions stored in the memory, receive a signal through a receiver, and transmit a signal through a transmitter, to perform the method according to any one of the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed in different chips. A type of the memory and a manner in which the memory and the processor are disposed are not limited in embodiments of this application.

It should be understood that a related data exchange process such as sending of indication information may be a process of outputting the indication information from the processor, and receiving of capability information may be a process of receiving input capability information by the processor. Specifically, data that is output by the processor may be output to a transmitter, and input data received by the processor may be from the receiver. The transmitter and the receiver may be collectively referred to as a transceiver.

The processing apparatus in the fifth aspect may be a chip. The processor may be implemented by hardware or software. When the processor is implemented by the hardware, the processor may be a logic circuit, an integrated circuit, or the like. When the processor is implemented by the software, the processor may be a general-purpose processor, and may be implemented by reading software code stored in the memory. The memory may be integrated into the processor, or may be located outside the processor and exist independently.

According to a sixth aspect, a computer program product is provided. The computer program product includes a computer program (or may be referred to as code or instructions). When the computer program is run, a computer is enabled to perform the method according to any one of the possible implementations of the first aspect.

According to a seventh aspect, a computer-readable storage medium is provided. The computer-readable storage medium stores a computer program (which may also be referred to as code or instructions). When the computer program is run on a computer, the computer is enabled to perform the method according to any one of the possible implementations of the first aspect.

### BRIEF DESCRIPTION OF DRAWINGS

FIG. 1(a) to FIG. 1(f) are diagrams of a communication system according to an embodiment of this application;
FIG. 2 is a schematic flowchart of a signal sending method according to an embodiment of this application;
FIG. 3 is a block diagram of a signal sending apparatus according to an embodiment of this application; and
FIG. 4 is a block diagram of another signal sending apparatus according to an embodiment of this application.

### DESCRIPTION OF EMBODIMENTS

The following describes technical solutions of this application with reference to accompanying drawings.

To clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" represents giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c, where a, b, and c may be single or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future evolved communication system such as a 6th generation (6th generation, 6G) system.

The technical solutions in embodiments of this application may be further applied to various communication systems based on non-orthogonal multiple access technologies, for example, a sparse code multiple access (sparse code multiple access, SCMA) system. Certainly, SCMA may also be referred to as another name in the communication field. Further, the technical solutions in embodiments of this application may be applied to a multi-carrier transmission system using the non-orthogonal multiple access technologies, for example, orthogonal frequency division multiplexing (orthogonal frequency division multiplexing, OFDM), filter bank multi-carrier (filter bank multi-carrier, FBMC), generalized frequency division multiplexing (generalized frequency division multiplexing, GFDM), and filtered orthogonal frequency division multiplexing (filtered-OFDM, F-OFDM) systems using the non-orthogonal multiple access technologies.

Embodiments of this application may be further applied to a system such as an open access network (open RAN, O-RAN, or ORAN), a cloud radio access network (cloud radio access network, CRAN), or a virtualized radio access network (virtualized RAN, vRAN), or a communication system integrating two or more of the foregoing systems.

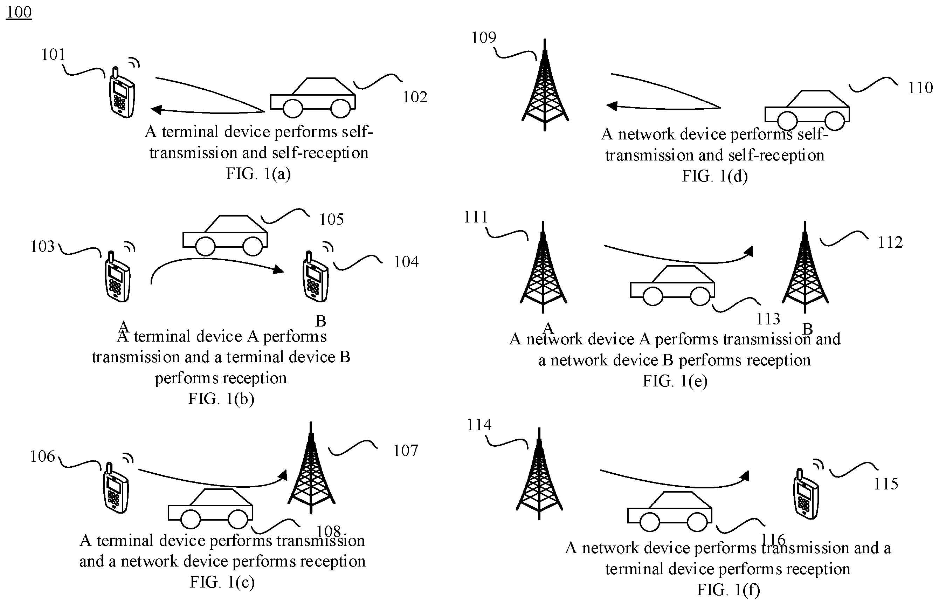

A scenario to which embodiments of this application are applied is an integrated sensing and communication scenario. FIG. 1 is a diagram of a communication system 100 according to an embodiment of this application. From a perspective of sensing modes, the communication system 100 may include six sub-scenarios: (a) a terminal device performs self-transmission and self-reception, where a terminal device 101 and a sensed target 102 are included; (b) a terminal device A performs transmission and a terminal device B performs reception, where a terminal device 103, a terminal device 104, and a sensed target 105 are included; (c) a terminal device performs transmission and a network device performs reception, where a terminal device 106, a network device 107, and a sensed target 108 are included; (d) a network device performs self-transmission and self-reception, where a network device 109 and a sensed target 110 are included; (e) a network device A performs transmission and a network device B performs reception, where a network device 111, a network device 112, and a sensed target 113 are included; and (f) a network device performs transmission and a terminal device performs reception, where a network device 114, a terminal device 115, and a sensed target 116 are included. The sensed target is not limited to a vehicle, a low-altitude uncrewed aerial vehicle, or a pedestrian, and also includes another moving or static object.

It should be understood that the network device or the terminal device may be configured with a plurality of antennas, and the plurality of antennas may include at least one transmit antenna used to send a signal and at least one receive antenna used to receive a signal. In addition, the network device or the terminal device may additionally include a transmitter chain and a receiver chain. A person of ordinary skill in the art may understand that both the transmitter chain and the receiver chain may include a plurality of components related to signal transmission and reception (for example, a processor, a modulator, a multiplexer, a demodulator, a demultiplexer, or an antenna). Therefore, the network device may communicate with the terminal device by using a multi-antenna technology.

It should be understood that the communication system shown in FIG. 1 is merely a diagram. The communication system may further include another terminal device and another network device, for example, a wireless relay device and a wireless backhaul device, which are not shown in FIG. 1. Quantities of network devices and terminal devices included in the communication system are not limited in embodiments of this application.

In embodiments of this application, the network device may be any device having a wireless transceiver function. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements a part of functions of the gNB, and the DU implements a part of the functions of the gNB. For example, the CU may be responsible for processing a non-real-time protocol and service, for example, may implement functions/a function of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing a physical layer protocol and a real-time service, for example, may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement a part of physical layer processing functions, and a function related to radio frequency processing and an active antenna. Information at the RRC layer may be eventually submitted to the PHY layer and converted into information at the PHY layer, or is converted from information at the PHY layer. Therefore, in such an architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In different systems, the CU (or a CU-CP or a CU-UP), the DU, or an RU may alternatively have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

Any unit among the CU (or the CU-CP or the CU-UP), the DU, and the RU in this application may be implemented through a software module, a hardware module, or a combination of a software module and a hardware module.

The network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer having a wireless transceiver function (for example, a notebook computer or a palmtop computer), a mobile Internet device (mobile internet device, MID), a virtual reality (virtual reality, VR) device, an augmented reality (augmented reality, AR) device, a wireless terminal in industrial control (industrial control), a wireless terminal in autonomous driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term for wearable devices that are intelligently designed and developed for daily wear by using a wearable technology, for example, glasses, gloves, a watch, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to be used with other devices such as smartphones, for example, various smart bands or smart jewelry for monitoring physical signs.

In addition, the terminal device may alternatively be a terminal device in an internet of things (internet of things, IoT) system. IoT is an important part in future development of information technology. A main technical feature of the IoT is to connect an object to a network through a communication technology, to implement an intelligent network for interconnection between a person and a machine or and interconnection between objects. An IoT technology may implement massive connections, deep coverage, and terminal power saving by using, for example, a narrow band (narrow band, NB) technology.

In addition, the terminal device may further include a sensor such as an intelligent printer, a train detector, or a sensor deployed in a gas station. Main functions of the terminal device include collecting data (for a part of terminal devices), receiving control information and downlink data from a network device, sending an electromagnetic wave, and transmitting uplink data to the network device.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the method provided in embodiments of this application may be executed by the terminal device or the network device, or a functional module that can invoke and execute the program in the terminal device or the network device.

Moreover, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

For ease of understanding, the following first describes terms in embodiments of this application.

### 1. Integrated sensing and communication technology

The integrated sensing and communication technology is considered as one of key technologies that can extend a service capability of a mobile communication network. A core idea of the technology is to add a sensing capability to the mobile communication network, and construct a capability of detecting, tracking, and imaging a target, so that communication and sensing capabilities are integrated into one network, thereby achieving harmonious coexistence and even mutual benefit and reciprocity.

There are generally two types of sensing modes: mono-static sensing and bi-static sensing. The mono-static sensing means that a transmit end and a receive end of a sensing signal are a same device. In a process for the sensing signal, this sensing station needs to send the sensing signal and receive a reflected signal of the sensing signal from a surface of a target. Therefore, a mono-static sensing mode is also referred to as a self-transmission and self-reception mode. For the bi-static sensing, a transmit end and a receive end of a sensing signal are two different devices. In a process for the sensing signal, after a sensing device A sends the sensing signal, a sensing device B receives a reflected signal of the signal from a surface of a target. Therefore, a bi-static sensing mode is also referred to as a mode in which the sensing device A performs transmission and the sensing device B performs reception.

Communication means that a transmit end device modulates information on a radio wave and sends the radio wave to a receive end device and the receive end device demodulates a signal carried on the radio wave to obtain the information. Sensing requires a transmit end device to send a radio wave in a specific direction. When the radio wave irradiates a surface of a target, a reflected wave may be generated. Then, a receive end device receives and processes the reflected wave to obtain information such as a location, a speed, and a type of the target. It can be learned that a technical principle of the sensing is different from that of the communication.

### 2. Wireless communication air interface technology

In a wireless communication system, communication may be classified into different types based on different types of sending nodes and receiving nodes. Generally, information transmission from a network device to a terminal device is referred to as downlink communication, and information transmission from a terminal device to a network device is referred to as uplink communication.

In an LTE/long term evolution advanced (long term evolution advanced, LTE-A) communication system and an NR system, communication may be mainly classified into an FDD mode and a TDD mode based on different duplex modes. For a wireless communication system operating in the TDD mode, a downlink carrier and an uplink carrier of the system are carriers at a same carrier frequency. For a wireless communication system operating in the FDD mode, a downlink carrier and an uplink carrier of the system are carriers at different carrier frequencies.

An orthogonal frequency division multiple access (orthogonal frequency division multiplexing access, OFDMA) manner is usually used as a multiple access manner. A main feature of the orthogonal frequency division multiple access manner is to divide a transmission resource into time-frequency resource elements (resource element, RE) that are orthogonal to each other, where signals sent by a transmit end device are all carried on the REs and transmitted to a receive end device. Because different REs are orthogonal to each other, the receive end device may separately receive a signal sent on each RE.

With continuous development of communication systems, a terminal device supports simultaneous access to two network devices. This access manner is referred to as dual connectivity (dual connectivity, DC). One network device is a primary network device, and the other network device is a secondary network device. One or more cells in which the primary network device provides a service for the terminal device are referred to as a master cell group (master cell group, MCG), and one or more cells in which the secondary network device provides a service for the terminal device are referred to as a secondary cell group (secondary cell group, SCG).

In a development and evolution process of wireless communication systems, the terminal device may support simultaneous access to two different radio access systems. For example, an operator may deploy both an NR system and an LTE system, and the terminal device also supports simultaneous access to an LTE network device and an NR network device. Because LTE is also referred to as evolved universal terrestrial radio access (evolved universal terrestrial radio access, E-UTRA), such an access manner is referred to as evolved universal terrestrial radio access-new radio dual connectivity (nr e-utra nr dual connectivity, EN-DC). In an EN-DC mode, the LTE network device is a primary network device, and the NR network device is a secondary network device.

Certainly, with evolution of the systems, a new radio-evolved universal terrestrial radio access dual connectivity (NR E-UTRA dual connectivity, NE-DC) mode may also be supported in the future. In other words, the NR network device is a primary network device, and the LTE network device is a secondary network device. Because both terminals in the EN-DC and the NE-DC may each access network devices of two different radio access technologies, these DC modes may also be collectively referred to as multi-radio access technology dual connectivity (multi-RAT dual connectivity, MR-DC). In addition, a terminal device that supports only NR may also simultaneously access two different NR network devices. Such a connection manner is referred to as NR-NR DC.

To improve a rate at which the terminal device sends an uplink signal to the network device, the terminal device operating in a DC mode may send uplink signals to the network device on both carriers in an MCG and an SCG within a same time period. However, total power of the terminal device for sending uplink signals on all carriers should not exceed a preset threshold of transmit power of the terminal device. Therefore, if total power at which the terminal sends the uplink signal on the carriers in the MCG and the SCG exceeds maximum transmit power, the terminal device needs to actively reduce transmit power on one or more carriers.

Currently, some terminal devices may determine priorities of signals based on signal types of uplink communication signals sent on the carriers in the MCG and the SCG within a same time period, and reduce transmit power of a signal with a lower priority. For example, in a descending order of priorities, signal types of the uplink communication signal may include: a physical uplink control channel (physical uplink control channel, PUCCH) carrying an acknowledgment (acknowledgment, ACK), a negative acknowledgment (negativeacknowledgment, NACK), and a communication protocol (selective repeat, SR), a physical uplink shared channel (physical uplink shared channel, PUSCH) carrying an ACK and a NACK, a PUCCH carrying channel state information CSI, a PUSCH carrying CSI, a PUSCH carrying no ACK, NACK, or CSI, and a sounding reference signal (sounding reference signal, SRS). If types of signals sent by the terminal device on two CGs are the same, transmit power of a signal on the SCG may be reduced based on a case in which a priority of a signal on the MCG is higher than a priority of the signal on the SCG.

However, in an uplink multi-carrier integrated sensing and communication scenario, a signal sending method of the terminal device cannot effectively control transmit power of an uplink signal, resulting in a reduction in the rate at which the terminal device sends the uplink signal to the network device.

In view of this, an embodiment of this application provides a signal sending method. In an uplink multi-carrier integrated sensing and communication scenario, a terminal device may simultaneously send any two uplink signals among an uplink sensing signal, an uplink integrated sensing and communication signal, or an uplink communication signal on two different carriers. When a sum of transmit power of the two uplink signals exceeds a transmit power threshold of the terminal device, transmit power of an uplink signal with a lower priority can be reduced based on priority information of the two uplink signals. This helps increase a rate at which the terminal device sends the uplink signal to a network device.

The following describes in detail a signal sending method and apparatus provided in this application with reference to the accompanying drawings. It should be understood that the technical solutions of this application may be applied to a wireless communication system, for example, the communication system 100 shown in FIG. 1.

There may be a wireless communication connection relationship between two communication apparatuses in the wireless communication system. One of the two communication apparatuses may correspond to the terminal device that performs self-transmission and self-reception in FIG. 1(a), for example, the terminal device itself or a chip configured in the terminal device.

One of the two communication apparatuses may alternatively correspond to the terminal device in FIG. 1(b), and may be the terminal device itself or a chip configured in the terminal device, and the other one of the two communication apparatuses may correspond to the terminal device shown in FIG. 1(b), for example, the terminal device itself or a chip configured in the terminal device.

One of the two communication apparatuses may alternatively correspond to the terminal device shown in FIG. 1(c), and may be the terminal device itself or a chip configured in the terminal device, and the other one of the two communication apparatuses may correspond to the network device shown in FIG. 1(c), for example, the network device itself or a chip configured in the network device.

One of the two communication apparatuses may correspond to the network device that performs self-transmission and self-reception in FIG. 1(d), for example, the network device itself or a chip configured in the network device.

One of the two communication apparatuses may alternatively correspond to the network device in FIG. 1(e), and may be the network device itself or a chip configured in the network device, and the other one of the two communication apparatuses may correspond to the network device shown in FIG. 1(e), for example, the network device itself or a chip configured in the network device.

One of the two communication apparatuses may alternatively correspond to the network device shown in FIG. 1(f), for example, the network device itself or a chip configured in the network device, and the other one of the two communication apparatuses may correspond to the terminal device shown in FIG. 1(f), for example, the terminal device itself or a chip configured in the terminal device.

Without loss of generality, the following describes in detail the signal transmission method provided in embodiments of this application by using an example in which a terminal device is a sending device and the network device is a receiving device.

In this application, "sending a signal to a network device" may be understood as that a destination end of the signal is the network device, and may include directly or indirectly sending information to the network device. Necessary processing may be performed on information between a source end and the destination end to which the information is sent, but the destination end may understand valid information from the source end. Similar expressions in this application may be construed in a similar manner. Details are not described herein again.

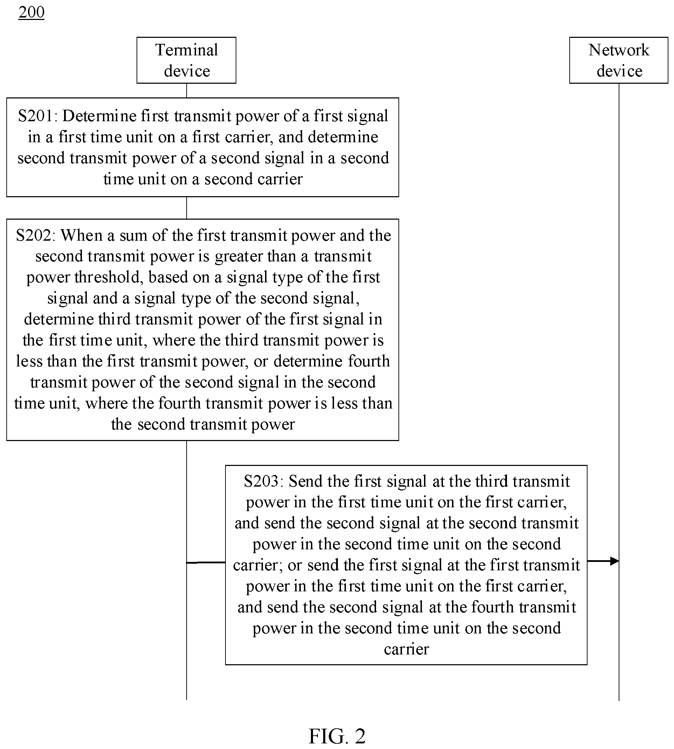

FIG. 2 shows a signal sending method 200 according to an embodiment of this application. The method 200 includes the following steps.

S201: A terminal device determines first transmit power of a first signal in a first time unit on a first carrier, and determines second transmit power of a second signal in a second time unit on a second carrier, where the first time unit and the second time unit overlap in time, and at least one of the first signal and the second signal is an uplink integrated sensing and communication signal or an uplink sensing signal.

It should be understood that the first time unit and the second time unit partially or completely overlap in time. This is not limited in embodiments of this application.

S202: When a sum of the first transmit power and the second transmit power is greater than a transmit power threshold, based on a signal type of the first signal and a signal type of the second signal, the terminal device determines third transmit power of the first signal in the first time unit, where the third transmit power is less than the first transmit power, or determines fourth transmit power of the second signal in the second time unit, where the fourth transmit power is less than the second transmit power.

S203: The terminal device sends the first signal at the third transmit power in the first time unit on the first carrier, and sends the second signal to a network device at the second transmit power in the second time unit on the second carrier; or sends the first signal at the first transmit power in the first time unit on the first carrier, and sends the second signal to a network device at the fourth transmit power in the second time unit on the second carrier.

It should be understood that the network device may include a first network device and a second network device. The first network device may be a group of network devices, and may include one or more network devices. The second network device may be a group of network devices, and may include one or more network devices.

For example, the terminal device may send the first signal to the first network device in N first time units on the first carrier, and may send the second signal to the second network device in the second time unit on the second carrier.

In this embodiment of this application, based on priority information of signal types of the first signal and the second signal, the terminal device may reduce the first transmit power of the first signal to the third transmit power if a priority of the first signal is lower than a priority of the second signal, or the terminal device may reduce the second transmit power of the second signal to the fourth transmit power if a priority of the second signal is lower than a priority of the first signal.

For example, the first signal may include the uplink sensing signal, and the second signal may include an uplink communication signal. If a priority of the uplink sensing signal is higher than a priority of the uplink communication signal, the terminal device may send the uplink communication signal to the first network device at the fourth transmit power. Alternatively, if a priority of the uplink sensing signal is lower than a priority of the uplink communication signal, the terminal device may send the uplink sensing signal to the second network device at the third transmit power.

For example, the first signal may include the uplink integrated sensing and communication signal, and the second signal may include an uplink communication signal. If a priority of the uplink integrated sensing and communication signal is higher than a priority of the uplink communication signal, the terminal device may send the uplink communication signal to the first network device at the fourth transmit power. Alternatively, if a priority of the uplink integrated sensing and communication signal is lower than a priority of the uplink communication signal, the terminal device may send the uplink integrated sensing and communication signal to the second network device at the third transmit power.

For example, the first signal may include the uplink integrated sensing and communication signal, and the second signal may include the uplink sensing signal. If a priority of the uplink integrated sensing and communication signal is higher than a priority of the uplink sensing signal, the terminal device may send the uplink sensing signal to the first network device at the fourth transmit power. Alternatively, a priority of the uplink integrated sensing and communication signal may be lower than a priority of the uplink sensing signal. In this case, the terminal device may send the uplink integrated sensing and communication signal to the second network device at the third transmit power.

According to the signal sending method in this embodiment of this application, in an uplink multi-carrier integrated sensing and communication scenario, the terminal device may simultaneously send any two different uplink signals among the uplink sensing signal, the uplink integrated sensing and communication signal, or the uplink communication signal on two different carriers. When a sum of transmit power of the two uplink signals exceeds a transmit power threshold of the terminal device, the terminal device can reduce transmit power of an uplink signal with a lower priority based on priority information of the two uplink signals. This helps increase a rate at which the terminal device sends the uplink signal to the network device.

It should be understood that the foregoing time unit may be a millisecond, a subframe, a slot, a mini-slot, one symbol, or a plurality of consecutive symbols. This is not limited in embodiments of this application.

For example, one slot in an NR system may include 14 OFDM symbols, a slot length corresponding to a subcarrier spacing of 15 kHz is 1 ms, a slot length corresponding to a subcarrier spacing of 30 kHz is 0.5 ms, and a time length of one subframe in the NR system is 1 ms.

It should be further understood that the first carrier and the second carrier are different carriers.

Optionally, the first carrier and the second carrier may belong to a same group of network devices. For example, the first carrier and the second carrier may belong to a same MCG or a same SCG. Alternatively, the first carrier and the second carrier may belong to different groups of network devices. For example, the first carrier and the second carrier may respectively belong to an MCG and an SCG, the first carrier and the second carrier may respectively belong to two different SCGs, or the first carrier and the second carrier may respectively belong to two different MCGs. This is not limited in embodiments of this application.

Optionally, the first carrier and the second carrier may belong to a same radio access technology. For example, both the first carrier and the second carrier are NR carriers, LTE carriers, or 6G carriers. Alternatively, the first carrier and the second carrier may belong to different radio access technologies. For example, the first carrier and the second carrier are NR and LTE carriers respectively, NR and 6G carriers respectively, or LTE and 6G carriers respectively. This is not limited in embodiments of this application.

It should be understood that the foregoing priority information may be reflected in a plurality of different manners. In a possible implementation, the foregoing priority may correspond to a priority value. For example, a smaller priority value indicates a higher corresponding priority. Alternatively, a higher priority value indicates a higher corresponding priority. An example in which a smaller priority value indicates a higher corresponding priority is used. If a value range of the priority value may be an integer ranging from 1 to 2, when the priority value is 1, it indicates a highest priority. It should be understood that the priority value whose value range is from 1 to 2 is merely shown herein for ease of understanding, but this should not constitute any limitation on this application. A specific value range of the priority value is not limited in this application. For example, the value range may alternatively be an integer ranging from 0 to 2. In another possible implementation, the priority may alternatively be represented by using a priority level. For example, the priority includes a high priority, a medium priority, and a low priority. This is not limited in embodiments of this application.

Optionally, in this embodiment of this application, before S201, the terminal device may determine to send the first signal to the first network device in the N first time units on the first carrier, where N is an integer greater than 1; and the terminal device may further determine to send the second signal to the second network device in one second time unit on the second carrier.

When total power of the first signal in the N first time units is greater than a preset power threshold, the priority of the first signal is lower than a priority of the second signal, or when total power of the first signal in the N first time units is less than or equal to a preset power threshold, the priority of the first signal is higher than the priority of the second signal, where the total power of the first signal in the N first time units is a sum of a sum of transmit power of M first time units that have been sent and a sum of transmit power of a first signal that is to be sent in N-M first time units.

For example, the uplink sensing signal or the uplink integrated sensing and communication signal needs to be continuously sent in the N first time units to better maintain a signal sensing capability. Therefore, a signal priority may be determined based on total power of the signal in the N first time units.

It should be understood that the preset power threshold is equal to a coefficient r multiplied by a product of N1 and the first transmit power, where r is a real number greater than 0 and less than 1.

Optionally, in a possible case, when a transmit power difference between the first transmit power and the third transmit power is less than or equal to a preset threshold, the first signal is sent to the first network device at the third transmit power in the first time unit on the first carrier, and the second signal is sent to the second network device at the second transmit power in the second time unit on the second carrier.

In another possible case, when the transmit power difference between the first transmit power and the third transmit power of the first signal is greater than the preset threshold, the terminal device may not send the first signal to the network device; or when a transmit power difference between the second transmit power and the fourth transmit power of the second signal is greater than the preset threshold of the transmit power difference, the terminal device may not send the second signal to the network device.

For example, the transmit power difference may be a difference in logarithmic values. For example, if the first transmit power is 2 decibels (decibels, dB), and the third transmit power is 17 dB, the transmit power difference is 3 dB. Alternatively, the transmit power difference may be a difference in linear values. For example, if the first transmit power is 0.05 W, and the third transmit power is 0.03 watt (watt, W), the transmit power difference is 0.02 W. Both values of the foregoing transmit power differences approach 0, and exceed the preset threshold of the transmit power difference.

In this embodiment of this application, the terminal device may send the first signal to the first network device at the first transmit power, and may send the second signal to the second network device at the second transmit power. When the sum of the first transmit power and the second transmit power exceeds the transmit power threshold of the terminal device, the terminal device may reduce transmit power of a signal with a lower priority based on priority information of two signals. The first signal and the second signal are different signals.

For example, the following specifically describes, in three possible manners, that the terminal device may reduce the transmit power of the signal with the lower priority based on the priority information of the two signals when the first signal and the second signal are different signals.

Manner 1: If the first signal is the uplink sensing signal, and the second signal is the uplink communication signal:
In a possible implementation, the priority of the uplink sensing signal is higher than that of the uplink communication signal. In this case, the terminal device may reduce the second transmit power of the uplink communication signal to the fourth transmit power. Therefore, the terminal device may send the uplink sensing signal to the first network device at the first transmit power, and may send the uplink communication signal to the second network device at the fourth transmit power.

It should be understood that the uplink sensing signal is a signal continuously sent in the N first time units. If transmit power of the signal is reduced in one of the time units, performance of the uplink sensing signal sent in the N first time units may not meet a requirement, resulting in a waste of the N first time units. Therefore, the priority of the uplink sensing signal is higher than the priority of the uplink communication signal.

In another possible implementation, when the uplink communication signal is any signal among a sounding reference signal SRS, a physical uplink shared channel PUSCH carrying no acknowledgment ACK, a PUSCH carrying no negative acknowledgment NACK, or a PUSCH carrying no channel state information CSI, the priority of the uplink sensing signal is higher than the priority of the uplink communication signal. In this case, the terminal device may reduce the second transmit power of the uplink communication signal to the fourth transmit power. Therefore, the terminal device may send the uplink sensing signal to the first network device at the first transmit power, and may send the uplink communication signal to the second network device at the fourth transmit power.

In still another possible implementation, when the uplink communication signal is any signal among a physical random access channel PRACH, a physical uplink shared channel PUCCH carrying an ACK, a PUCCH carrying a NACK, a PUCCH carrying CSI, a PUCCH carrying a communication protocol SR, a PUSCH carrying an ACK, a PUSCH carrying a NACK, or a PUSCH carrying CSI, the priority of the uplink sensing signal is lower than the priority of the uplink communication signal. In this case, the terminal device may reduce the first transmit power of the uplink sensing signal to the third transmit power. Therefore, the terminal device may send the uplink sensing signal to the first network device at the third transmit power, and may send the uplink communication signal to the second network device at the second transmit power.

Manner 2: If the first signal is the uplink integrated sensing and communication signal, and the second signal is the uplink communication signal:
In a possible implementation, the priority of the uplink integrated sensing and communication signal is higher than the priority of the uplink communication signal. In this case, the terminal device may reduce the second transmit power of the uplink communication signal to the fourth transmit power. Therefore, the terminal device may send the uplink integrated sensing and communication signal to the first network device at the first transmit power, and may send the uplink communication signal to the second network device at the fourth transmit power.

It should be understood that the uplink integrated sensing and communication signal may have two capabilities: communication and sensing capabilities. To better protect communication and sensing capabilities of a network, the priority of the uplink integrated sensing and communication signal is higher than the priority of the uplink communication signal.

In another possible implementation, communication functions of the uplink integrated sensing and communication signal and the uplink communication signal are the same, and the priority of the uplink integrated sensing and communication signal is higher than the priority of the uplink communication signal. In this case, the terminal device may reduce the second transmit power of the uplink communication signal to the fourth transmit power. Therefore, the terminal device may send the uplink integrated sensing and communication signal to the first network device at the first transmit power, and may send the uplink communication signal to the second network device at the fourth transmit power.

For example, that the communication functions are the same may mean that the uplink integrated sensing and communication signal and the uplink communication signal are the same, and each may be any one of a PUCCH carrying an ACK, a NACK, and an SR, a PUSCH carrying an ACK and a NACK, a PUCCH carrying CSI, a PUSCH carrying CSI, a PUSCH carrying no ACK, NACK, or CSI, and an SRS. The uplink integrated sensing and communication signal has the sensing capability. In this case, the priority of the uplink integrated sensing and communication signal is higher than the priority of the uplink communication signal.

It should be understood that the foregoing signals are listed in a descending order of priorities.

In still another possible implementation, the communication function of the uplink integrated sensing and communication signal is different from the communication function of the uplink communication signal. If a priority of the communication function of the uplink integrated sensing and communication signal is higher than a priority of the communication function of the uplink communication signal, the terminal device may send the uplink integrated sensing and communication signal to the first network device at the first transmit power, and may send the uplink communication signal to the second network device at the fourth transmit power. Alternatively, if a priority of the communication function of the uplink integrated sensing and communication signal is lower than a priority of the communication function of the uplink communication signal, the terminal device may send the uplink integrated sensing and communication signal to the first network device at the third transmit power, and may send the uplink communication signal to the second network device at the second transmit power.

For example, that the communication functions are the same may mean that the uplink integrated sensing and communication signal and the uplink communication signal are different. For example, if the uplink integrated sensing and communication signal is a PUCCH carrying CSI, and the uplink communication signal is a PUSCH carrying a NACK, the priority of the uplink integrated sensing and communication signal is higher than the priority of the uplink communication signal. For example, if the uplink integrated sensing and communication signal is an SRS, and the uplink communication signal is a PUCCH carrying an ACK, the priority of the uplink communication signal is higher than the priority of the uplink integrated sensing and communication signal.

Manner 3: If the first signal is the uplink integrated sensing and communication signal, and the second signal is the uplink sensing signal:
In a possible implementation, the priority of the uplink integrated sensing and communication signal is higher than the priority of the uplink sensing signal. In this case, the terminal device may reduce the second transmit power of the uplink sensing signal to the fourth transmit power. Therefore, the terminal device may send the uplink integrated sensing and communication signal to the first network device at the first transmit power, and may send the uplink sensing signal to the second network device at the fourth transmit power.

It should be understood that the uplink integrated sensing and communication signal may have two capabilities: communication and sensing capabilities. To better protect and maintain communication and sensing capabilities of a network, the priority of the uplink integrated sensing and communication signal is higher than the priority of the uplink sensing signal.

In another possible implementation, the priority of the uplink integrated sensing and communication signal is lower than the priority of the uplink sensing signal. In this case, the terminal device may reduce the second transmit power of the uplink integrated sensing and communication signal to the fourth transmit power. Therefore, the terminal device may send the uplink integrated sensing and communication signal to the first network device at the third transmit power, and may send the uplink sensing signal to the second network device at the second transmit power.

For example, if the uplink integrated sensing and communication signal is an SRS, and the uplink sensing signal is a PUSCH, the priority of the uplink sensing signal is higher than the priority of the uplink integrated sensing and communication signal.

According to the signal sending method in this embodiment of this application, in the uplink multi-carrier integrated sensing and communication scenario, the terminal device may simultaneously send any two different uplink signals among the uplink sensing signal, the uplink integrated sensing and communication signal, or the uplink communication signal to each of the first network device and the second network device on two different carriers. When the sum of the transmit power of the two uplink signals exceeds the transmit power threshold of the terminal device, the terminal device can reduce the transmit power of the uplink signal with the lower priority based on the priority information of the two uplink signals. This helps increase the rate at which the terminal device sends the uplink signal to the network device.

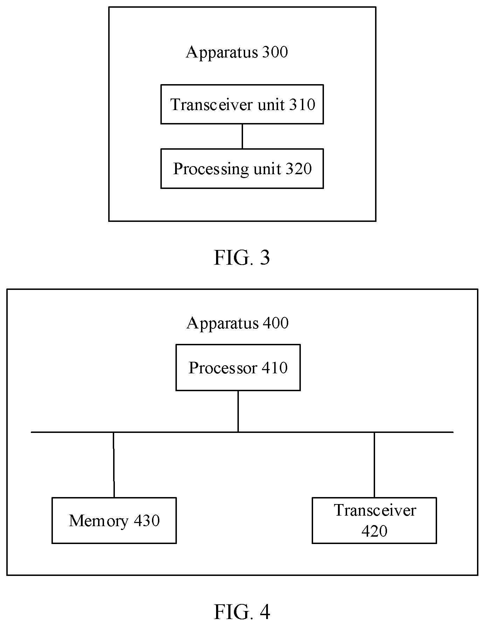

The foregoing describes in detail the signal sending method according to an embodiment of this application with reference to FIG. 1 and FIG. 2. The following describes in detail a signal sending apparatus according to an embodiment of this application with reference to FIG. 3 and FIG. 4.

FIG. 3 shows a signal sending apparatus 300 according to an embodiment of this application. The apparatus 300 includes a transceiver unit 310 and a processing unit 320.

The processing unit 320 is configured to: determine first transmit power of a first signal in a first time unit on a first carrier, and determine second transmit power of a second signal in a second time unit on a second carrier, where at least one of the first signal and the second signal is an uplink integrated sensing and communication signal or an uplink sensing signal. The processing unit 320 is further configured to: when a sum of the first transmit power and the second transmit power is greater than a transmit power threshold, based on a signal type of the first signal and a signal type of the second signal, determine third transmit power of the first signal in the first time unit, where the third transmit power is less than the first transmit power, or determine fourth transmit power of the second signal in the second time unit, where the fourth transmit power is less than the second transmit power. The transceiver unit 310 is configured to: send the first signal at the third transmit power in the first time unit on the first carrier, and send the second signal at the second transmit power in the second time unit on the second carrier; or send the first signal at the first transmit power in the first time unit on the first carrier, and send the second signal at the fourth transmit power in the second time unit on the second carrier.

Optionally, the first signal includes the uplink sensing signal, the second signal includes an uplink communication signal, a priority of the uplink sensing signal is higher than a priority of the uplink communication signal, the first signal is sent at the first transmit power, and the second signal is sent at the fourth transmit power.

Optionally, the first signal includes the uplink sensing signal, the second signal includes one or more of the following: a sounding reference signal SRS, a physical uplink shared channel PUSCH carrying no acknowledgment ACK, a PUSCH carrying no negative acknowledgment NACK, or a PUSCH carrying no channel state information CSI, a priority of the first signal is higher than a priority of the second signal, the first signal is sent at the first transmit power, and the second signal is sent at the fourth transmit power.

Optionally, the first signal includes the uplink sensing signal, the second signal includes one or more of the following: a physical random access channel PRACH, a physical uplink shared channel PUCCH carrying an ACK, a PUCCH carrying a NACK, a PUCCH carrying CSI, a PUCCH carrying a communication protocol SR, a PUSCH carrying an ACK, a PUSCH carrying a NACK, or a PUSCH carrying CSI, a priority of the first signal is lower than a priority of the second signal, the first signal is sent at the third transmit power, and the second signal is sent at the second transmit power.

Optionally, the first signal includes the uplink integrated sensing and communication signal, the second signal includes an uplink communication signal, a priority of the uplink integrated sensing and communication signal is higher than a priority of the uplink communication signal, the first signal is sent at the first transmit power, and the second signal is sent at the fourth transmit power.

Optionally, the first signal includes the uplink integrated sensing and communication signal, the first signal includes the uplink integrated sensing and communication signal, the second signal includes the uplink communication signal, and a communication function of the uplink integrated sensing and communication signal is different from a communication function of the uplink communication signal. If a priority of the communication function of the uplink integrated sensing and communication signal is higher than a priority of the communication function of the uplink communication signal, a priority of the first signal is higher than a priority of the second signal, the first signal is sent at the first transmit power, and the second signal is sent at the fourth transmit power. Alternatively, if a priority of the communication function of the uplink integrated sensing and communication signal is lower than a priority of the communication function of the uplink communication signal, a priority of the first signal is lower than a priority of the second signal, the first signal is sent at the third transmit power, and the second signal is sent at the second transmit power.

Optionally, the first signal includes the uplink integrated sensing and communication signal, the second signal includes the uplink sensing signal, a priority of the uplink integrated sensing and communication signal is higher than a priority of the uplink sensing signal, the first signal is sent at the first transmit power, and the second signal is sent at the fourth transmit power.

Optionally, before determining the first transmit power of the first signal in the first time unit on the first carrier, the processing unit 320 is further configured to: determine to send first signal to a network device in N first time units on the first carrier, where N is an integer greater than 1. When total power of the first signal in the N first time units is greater than a preset power threshold, a priority of the first signal is lower than a priority of the second signal, or when total power of the first signal in the N first time units is less than or equal to a preset power threshold, a priority of the first signal is higher than a priority of the second signal. The total power of the first signal in the N first time units is a sum of a sum of transmit power of M first time units that have been sent and a sum of transmit power of a first signal that is to be sent in N-M first time units, and M is an integer greater than 0.

Optionally, the first signal needs to be continuously sent in N1 first time units among the N first time units, and the preset power threshold satisfies the following formula: the preset power threshold is equal to a coefficient r multiplied by a product of N1 and the first transmit power. r is a real number greater than 0 and less than 1, and N1 is an integer greater than 1.

Optionally, sending the first signal at the third transmit power in the first time unit on the first carrier, and sending the second signal at the second transmit power in the second time unit on the second carrier include: when a transmit power difference between the first transmit power and the third transmit power is less than or equal to a preset threshold, sending the first signal at the third transmit power in the first time unit on the first carrier, and sending the second signal at the second transmit power in the second time unit on the second carrier.

It should be understood that the apparatus 300 herein is implemented in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 300 may be specifically the terminal device in the foregoing embodiment, and the apparatus 300 may be configured to perform the procedures and/or steps corresponding to the terminal device in the foregoing method embodiment. To avoid repetition, details are not described herein again.

The apparatus 300 in the foregoing solutions has a function of implementing a corresponding step performed by the terminal device in the foregoing method. The function may be implemented by hardware, or may be implemented by hardware executing corresponding software. The hardware or the software includes one or more modules corresponding to the foregoing function. For example, the transceiver unit may be replaced with a receiver and a transmitter, and other units such as a processing unit may be replaced with a processor, to separately perform receiving and sending operations and related processing operations in the method embodiment.

In this embodiment of this application, the apparatus 300 in FIG. 3 may alternatively be a chip or a chip system, for example, a system on chip (system on chip, SoC). Correspondingly, the transceiver unit 310 may be a transceiver circuit of the chip. This is not limited herein.

FIG. 4 shows another signal sending apparatus 400 according to an embodiment of this application. The apparatus 400 includes a processor 410, a transceiver 420, and a memory 430. The processor 410, the transceiver 420, and the memory 430 communicate with each other through an internal connection path. The memory 430 is configured to store instructions. The processor 410 is configured to execute the instructions stored in the memory 430, to control the transceiver 420 to send a signal and/or receive a signal.

It should be understood that the apparatus 400 may be specifically the terminal device in the foregoing embodiments, and may be configured to perform the steps and/or procedures corresponding to the terminal device in the foregoing method embodiment. Optionally, the memory 430 may include a read-only memory and a random access memory, and provide instructions and data for the processor. A part of the memory may further include a non-volatile random access memory. For example, the memory may further store information about a device type. The processor 410 may be configured to execute the instructions stored in the memory, and when the processor 410 executes the instructions stored in the memory, the processor 410 is configured to perform the steps and/or procedures corresponding to the terminal device in the foregoing method embodiment. The transceiver 420 may include a transmitter and a receiver. The transmitter may be configured to implement steps and/or procedures corresponding to the transceiver and configured to perform a sending action. The receiver may be configured to implement steps and/or procedures corresponding to the transceiver and configured to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps of the foregoing method may be implemented through a hardware integrated logic circuit in the processor or through instructions in a form of software. The steps of the method disclosed with reference to embodiments of this application may be directly performed by a hardware processor, or may be performed by a combination of hardware in the processor and a software unit. The software unit may be located in a mature storage medium in the art, for example, a random access memory, a flash memory, a read-only memory, a programmable read-only memory, an electrically erasable programmable memory, or a register. The storage medium is located in the memory, and the processor executes instructions in the memory and completes the steps of the foregoing method in combination with hardware in the processor. To avoid repetition, details are not described herein again.

This application further provides a computer-readable storage medium. The computer-readable storage medium is configured to store a computer program, and the computer program is used to implement the method corresponding to the terminal device in the foregoing embodiment.

This application provides a computer program product. The computer program product includes a computer program (which may also be referred to as code or instructions). When the computer program is run on a computer, the computer may perform the method corresponding to the terminal device shown in the foregoing embodiment.

A person of ordinary skill in the art may be aware that, in combination with the method steps and the units described in embodiments disclosed in this specification, implementation can be performed by electronic hardware, computer software, or a combination thereof. To clearly describe interchangeability between the hardware and the software, the foregoing has generally described steps and composition of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be indirect couplings or communication connections through some interfaces, apparatuses, or units, or may be electrical connections, mechanical connections, or connections in other forms.

The units described as separate components may or may not be physically separate, and components displayed as units may or may not be physical units. To be specific, the components may be located at one position, or may be distributed on a plurality of network units. A part or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions in this application essentially, or the part contributing to the conventional technology, or all or a part of the technical solutions may be represented in a form of software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A signal sending method, comprising:
determining first transmit power of a first signal in a first time unit on a first carrier, and determining second transmit power of a second signal in a second time unit on a second carrier, wherein the first time unit and the second time unit overlap in time, and at least one of the first signal and the second signal is an uplink integrated sensing and communication signal or an uplink sensing signal;
when a sum of the first transmit power and the second transmit power is greater than a transmit power threshold, based on a signal type of the first signal and a signal type of the second signal, determining third transmit power of the first signal in the first time unit, wherein the third transmit power is less than the first transmit power, or determining fourth transmit power of the second signal in the second time unit, wherein the fourth transmit power is less than the second transmit power; and
sending the first signal at the third transmit power in the first time unit on the first carrier, and sending the second signal at the second transmit power in the second time unit on the second carrier; or
sending the first signal at the first transmit power in the first time unit on the first carrier, and sending the second signal at the fourth transmit power in the second time unit on the second carrier.

2. The method according to claim 1, wherein the first signal comprises the uplink sensing signal, the second signal comprises an uplink communication signal, a priority of the uplink sensing signal is higher than a priority of the uplink communication signal, the first signal is sent at the first transmit power, and the second signal is sent at the fourth transmit power.

3. The method according to claim 1, wherein the first signal comprises the uplink sensing signal, the second signal comprises one or more of the following: a sounding reference signal SRS, a physical uplink shared channel PUSCH carrying no acknowledgment ACK, a PUSCH carrying no negative acknowledgment NACK, or a PUSCH carrying no channel state information CSI, a priority of the first signal is higher than a priority of the second signal, the first signal is sent at the first transmit power, and the second signal is sent at the fourth transmit power.

4. The method according to claim 1, wherein the first signal comprises the uplink sensing signal, the second signal comprises one or more of the following: a physical random access channel PRACH, a physical uplink shared channel PUCCH carrying an ACK, a PUCCH carrying a NACK, a PUCCH carrying CSI, a PUCCH carrying a communication protocol SR, a PUSCH carrying an ACK, a PUSCH carrying a NACK, or a PUSCH carrying CSI, a priority of the first signal is lower than a priority of the second signal, the first signal is sent at the third transmit power, and the second signal is sent at the second transmit power.

5. The method according to claim 1, wherein the first signal comprises the uplink integrated sensing and communication signal, the second signal comprises the uplink communication signal, a priority of the uplink integrated sensing and communication signal is higher than a priority of the uplink communication signal, the first signal is sent at the first transmit power, and the second signal is sent at the fourth transmit power.

6. The method according to claim 1 or 5, wherein the first signal comprises the uplink integrated sensing and communication signal, the second signal comprises the uplink communication signal, and a communication function of the uplink integrated sensing and communication signal is different from a communication function of the uplink communication signal; and if a priority of the communication function of the uplink integrated sensing and communication signal is higher than a priority of the communication function of the uplink communication signal, a priority of the first signal is higher than a priority of the second signal, the first signal is sent at the first transmit power, and the second signal is sent at the fourth transmit power; or
if a priority of the communication function of the uplink integrated sensing and communication signal is lower than a priority of the communication function of the uplink communication signal, a priority of the first signal is lower than a priority of the second signal, the first signal is sent at the third transmit power, and the second signal is sent at the second transmit power.

7. The method according to claim 1, wherein the first signal comprises the uplink integrated sensing and communication signal, the second signal comprises the uplink sensing signal, a priority of the uplink integrated sensing and communication signal is higher than a priority of the uplink sensing signal, the first signal is sent at the first transmit power, and the second signal is sent at the fourth transmit power.

8. The method according to claim 1, wherein before determining the first transmit power of the first signal in the first time unit on the first carrier, the method further comprises:
determining to send the first signal to a network device in N first time units on the first carrier, wherein N is an integer greater than 1, wherein
when total power of the first signal in the N first time units is greater than a preset power threshold, a priority of the first signal is lower than a priority of the second signal, or when total power of the first signal in the N first time units is less than or equal to a preset power threshold, a priority of the first signal is higher than a priority of the second signal, wherein the total power of the first signal in the N first time units is a sum of a sum of transmit power of M first time units that have been sent and a sum of transmit power of the first signal that is to be sent in N-M first time units, and M is an integer greater than 0.

9. The method according to claim 8, wherein the first signal needs to be continuously sent in N1 first time units among the N first time units, and the preset power threshold satisfies the following formula:
the preset power threshold is equal to a coefficient r multiplied by a product of N1 and the first transmit power, wherein r is a real number greater than 0 and less than 1, and N1 is an integer greater than 1.

10. The method according to claim 1, wherein sending the first signal at the third transmit power in the first time unit on the first carrier, and sending the second signal at the second transmit power in the second time unit on the second carrier comprise:
when a transmit power difference between the first transmit power and the third transmit power is less than or equal to a preset threshold, sending the first signal at the third transmit power in the first time unit on the first carrier, and sending the second signal at the second transmit power in the second time unit on the second carrier.

11. A signal sending apparatus, comprising a unit configured to implement the method according to any one of claims 1 to 10.

12. A signal sending apparatus, comprising a processor, wherein the processor is coupled to a memory, the memory is configured to store a computer program, and when the processor invokes the computer program, the apparatus is enabled to perform the method according to any one of claims 1 to 10.

13. A computer-readable storage medium, configured to store a computer program, wherein the computer program comprises instructions used to implement the method according to any one of claims 1 to 10.

14. A computer program product, wherein the computer program product comprises instructions, and when the instructions are run on a computer, the computer is enabled to perform the method according to any one of claims 1 to 10.
